(19) Europäisches Patentamt
European Patent Office
Office européen des brevets

(11) **EP 2 212 960 B1**

(12) **EUROPÄISCHE PATENTSCHRIFT**

(45) Veröffentlichungstag und Bekanntmachung des Hinweises auf die Patenterteilung:
**13.07.2011 Patentblatt 2011/28**

(21) Anmeldenummer: **08847742.7**

(22) Anmeldetag: **22.10.2008**

(51) Int Cl.:
**H01M 8/12** *(2006.01)*    **H01M 8/24** *(2006.01)*

(86) Internationale Anmeldenummer:
**PCT/DE2008/001725**

(87) Internationale Veröffentlichungsnummer:
**WO 2009/059579 (14.05.2009 Gazette 2009/20)**

(54) **HOCHTEMPERATUR-BRENNSTOFFZELLENSTAPEL SOWIE DESSEN HERSTELLUNG**

HIGH-TEMPERATURE FUEL CELL STACK, AND PRODUCTION THEREOF

PILE DE CELLULES ÉLECTROCHIMIQUES HAUTE TEMPÉRATURE ET FABRICATION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **09.11.2007 DE 102007053879**

(43) Veröffentlichungstag der Anmeldung:
**04.08.2010 Patentblatt 2010/31**

(73) Patentinhaber: **Forschungszentrum Jülich GmbH 52425 Jülich (DE)**

(72) Erfinder:
• **RINGEL, Helmut**
  **52382 Niederzier (DE)**
• **REISGEN, Uwe**
  **52249 Eschweiler (DE)**

(56) Entgegenhaltungen:
**DE-A1- 4 002 951     DE-A1- 4 011 079**
**US-A1- 2003 096 147**

**Beschreibung**

Die Erfindung betrifft ein Hochtemperatur-Brennstoffzellensystem, insbesondere ein Brennstoffzellensystem mit oxidkeramischen Elektrolyten (SOFC = Solid Oxide Fuel Cell) sowie ein Verfahren zu dessen Herstellung.

Stand der Technik

Brennstoffzellen sind elektrische Stromquellen, in denen durch elektrochemische Oxidation einer leicht oxidierbaren Substanz, meist Wasserstoff mit Sauerstoff, chemische Energie in elektrische Energie umgewandelt wird. Aufgrund der geringen Spannung, die eine einzelne Brennstoffzelle liefert, werden in der Regel viele Brennstoffzellen über so genannte Interkonnektoren zur Steigerung der elektrischen Leistung in Reihe geschaltet und dabei elektrisch isolierend mit Glaslot verbunden und abgedichtet (Brennstoffzellenstapel). Die einzelnen Zelllebenen, das heißt die keramischen Zellen mit dem metallischen Interkonnektor werden, auch Kassetten genannt.

Die Betriebstemperatur eines Hochtemperatur-Brennstoffzellenstapels (SOFC-Stacks) liegt im Bereich von 700 bis 900 °C. Ein SOFC-Stack mit planaren Brennstoffzellen besteht üblicherweise aus keramischen Zellen und metallischen Interkonnektoren. Die keramische Zelle ist dabei in einem metallischen Rahmen eingebaut, der wiederum mit dem Interkonnektor verbunden ist.

In [1] wird beispielsweise die Herstellung eines Brennstoffzellenstapels beschrieben, wobei zunächst einzelne Baugruppen zu so genannten Kassetten gefügt werden, die anschließend zu dem eigentlichen Stapel zusammengebaut werden. Der erste Schritt besteht dabei in dem Einlöten der keramischen Zelle in ein so genanntes Fensterblech. Für diese Metall-Keramik-Verbindung wird das Reaktivlöten an Luft (RAB) verwendet. Im zweiten Schritt wird der gelötete Verbund mit dem Interkonnektor aus ferritischem Chromstahl durch Laserschweißen zu einer Kassette verschweißt. Das Laserschweißen soll den Wärmeeintrag und dadurch einhergehende Spannungen in dem Verbund minimieren. Da die keramische Zelle eine nur geringe Plastizität aufweist, muss beim Schweißen darauf geachtet werden, dass die thermisch induzierten Eigenspannungen klein gehalten werden. Die Eigenspannungen können ansonsten zum Verzug des fertig gelöteten Lötverbundes bzw. zu dauerhaften Schädigungen und zum Bruch der Zelle führen. Nach einem Dichtigkeitstest werden die Kassetten anschließend mit Glaslot elektrisch isolierend bei ca. 850 °C in einem Ofen zu einem Stack verbunden.

Die keramische Zelle besteht in der Regel aus Nickelcermet, mit dem Hauptanteil an Zirkonoxid und mit Nebenanteilen an Nickeloxid bzw. Nickel. Nickelcermet weist eine relativ gleichmäßige Wärmedehnung im Temperaturbereich von Raumtemperatur bis 1000 °C, d. h. einen temperaturunabhängigen thermischen Ausdehnungskoeffizienten von $\alpha = 12 \times 10^{-6}$ K$^{-1}$ auf. Demgegenüber besteht der metallische Blechrahmen in der Regel aus dem ferritischem Chromstahl und hat eine mit der Temperatur zunehmende relative Wärmedehnung. Der Ausdehnungskoeffizienten steigt von $\alpha = 11 \times 10^{-6}$ K$^{-1}$ bei tiefen Temperaturen auf $\alpha = 14 \times 10^{-6}$ K$^{-1}$ bei 1000 °C. Ein typischer Chromstahl umfasst z. B. Eisen mit ca. 22 % Cr und weiteren Spurenanteilen.

Zudem kann das zur Abdichtung der Zellen untereinander eingesetzte Glaslot in der Regel nicht exakt in seinem Ausdehnungskoeffizienten mit dem thermischen Ausdehnungskoeffizienten des Stahls in Übereinstimmung gebracht werden.

Problematisch bei dem vorgenannten Zellenaufbau ist, dass die keramische Zelle sehr spröde ist. Das bedeutet, dass sie nur geringe Kräfte übertragen kann, und insbesondere keine Zug- und Biegespannungen aushält. Zusätzlich ist die Zelle in der Regel relativ dünn und großflächig. Die typische Zelldicke variiert dabei zwischen 0,5 und 1,5 mm und die Fläche reicht bis zu 200 x 200 mm$^2$. Der metallische Rahmen und der Interkonnektor sind dagegen wesentlich stabiler ausgestaltet. Dadurch besteht für die keramische Zelle regelmäßig eine hohe Bruchgefahr durch die prinzipiellen Unterschiede der Wärmedehnung von Zelle und Interkonnektor mit Rahmen und zwar insbesondere durch die Temperaturunterschiede im SOFC-Stack, die beim Aufheizen und Abkühlen auftreten.

Zusätzlich besteht in der Glaslotfuge zwischen den einzelnen Kassetten eine latente Bruchgefahr, da das Glaslot prinzipiell spröde ist und Wärmespannungen zwischen den einzelnen Materialebenen wie vorgenannt auftreten.

Zusätzlich ist aus der US 2003/096147 A1 eine Hochtemperatur-Brennstoffzelle bekannt, welche aus einer Kassette besteht, welche neben der Brennstoffzelle einen mehrteiligen Zellrahmen mit einem Ausgleichsbereich aufweist, welcher mit einer bzw. mehreren vorgefertigten Sicken versehen ist.

Aufgabe und Lösung

Der Erfindung liegt die Aufgabe zugrunde, einen Hochtemperatur-Brennstoffzellenstapel zu schaffen, bei dem die vorgenannte Bruchgefahr deutlich verringert werden kann. Der Erfindung liegt zudem die Aufgabe zugrunde, ein Verfahren zur Herstellung eines solchen Hochtemperatur-Brennstoffzellenstapels zur Verfügung zu stellen.

Die Aufgaben der Erfindung werden gelöst durch ein Verfahren zur Herstellung einer Kassette für einen Hochtemperatur-Brennstoffzellenstapel gemäß Hauptanspruch sowie einem Hochtemperatur-Brennstoffzellenstapel gemäß Nebenanspruch. Vorteilhafte Ausgestaltungen des Verfahrens sowie des Systems ergeben sich aus den jeweils rückbezogenen Ansprüchen.

Gegenstand der Erfindung

Das erfindungsgemäße Verfahren zur Herstellung einer Kassette für einen Hochtemperatur-Brennstoffzellenstapel umfasst insbesondere zwei Schritte, in denen eine Zelle in einem metallischen Rahmen eingebaut wird.

Der Grundgedanke der Erfindung besteht darin, dass die Verbindung zwischen der Zelle und dem metallischen Rahmen der Zelle als eine Einheit des Interkonnektors zwar gasdicht, aber dennoch derart flexibel ausgestaltet sein muss, dass trotz wechselnder Temperaturbelastungen, und damit trotz wechselnder Ausdehnungen der unterschiedlichen beteiligten Materialien die sonst üblicherweise auftretende Bruchgefahr verringert oder sogar verhindert werden kann.

Bei dem erfindungsgemäßen Verfahren wird eine Brennstoffeinzelzelle in einen metallischen Rahmen eingebaut, der aus mindestens zwei Blechbereichen besteht, und zwar aus einem inneren dünnen Blechrahmen (Ausgleichsrahmen) und aus einem dickeren, äußeren Blech-rahmen (Außenrahmen). Dieser Rahmen ist vorteilhaft zweiteilig ausgeführt, kann aber auch einteilig ausgeführt werden. Eine einteilige Herstellung kann beispielsweise durch Gießen, Warmpressen oder Warmwalzen erfolgen.

Bei der Montage wird im Falle der zweiteiligen Variante des metallischen Rahmens zunächst in einem ersten Schritt das dünne Blech des Ausgleichsrahmens mit dem dickeren Blech des Außenrahmens verbunden. Diese Verbindung kann beispielsweise durch Verschweißen erfolgen, oder die Bleche werden z. B. gemeinsam durch einen Prägevorgang hergestellt. In einem zweiten Schritt wird anschließend bei hoher Temperatur von etwa 1000 °C die keramische Brennstoffzelle mit dem dünnen Blech des metallischen Rahmens verbunden. Dieser Vorgang kann beispielsweise durch Hochtemperaturlöten erfolgen.

Beim Abkühlen des Zellen/Rahmenverbundes von dieser hohen Temperatur auf Raumtemperatur schrumpft sowohl die Zelle, als auch der Rahmen, der metallische Rahmen jedoch stärker als die Zelle. Das bedeutet, dass während des Abkühlens Druckspannungen in die Zelle eingeleitet werden. Diese sind jedoch nur gering, da der innere, sehr dünnwandige Teil des Rahmens zunächst bei 1000 °C und bis herunter auf 700 °C sehr weich ist und kaum Kräfte übertragen kann. Dadurch kommt es regelmäßig beim weiteren Abkühlen zu einem Verbiegen des dünnwandigen Teils (Ausgleichsrahmens) des metallischen Rahmens dergestalt, dass sich eine um die Zelle umlaufende Einbuchtung in der Form einer Sicke ausbildet. Diese natürlich entstehende, der Zelle optimal angepasste Sickenform im umlaufenden Blechrahmen schützt zusammen mit den leichten Druckspannungen in der Brennstoffzelle diese während des Betriebs des Brennstoffzellenstapels vor einer zu starken Einleitung von Zugspannungen. Somit besteht für die Brennstoffzelle nur noch eine verminderte Bruchgefahr. Da sich die Sicke auf natürlichem Wege beim Abkühlen entwickelt, ist sie jeweils optimal an die Gegebenheiten der einzelnen Brennstoffzelle angepasst.

Dabei ist bedeutsam, dass die Entlastungsfunktion, die diese ausgebildete Sicke übernimmt, ausschließlich dadurch erreicht wird, dass sich diese Verwerfungen in dem Ausgleichsblech, bzw. der Ausgleichsfolie ausschließlich durch die angewendete Fügefolge, d. h. nur in Kombination mit dem verwendeten Fügeprozess, einstellt.

Demgegenüber würde ein Bauteil, welches schon vor dem Fügeprozess eine Sicke aufweist, zwar ebenfalls Spannungen ausgleichen können, jedoch nicht in dem Umfang, wie es die erfindungsgemäß ideale Sicke bewirkt, da diese naturgemäß ideal auf die Zelle eingestellt ist. Die erfindungsgemäße Sicke passt sich somit regelmäßig in idealer Weise an jeder Stelle den tatsächlich auftretenden Spannungen an.

In einer vorteilhaften Ausgestaltung wird bei dem Zusammenbau der Kassetten ein Abstandsrahmen vorgesehen, der ein steifes, bzw. sehr starres Bauelement darstellt.

Beim weiteren Zusammenbau ist anschließend die Anbindung eines Interkonnektors an den Abstandsrahmen vorgesehen, der gleichzeitig über ein Nickelnetz die elektrische Kontaktierung mit der Anode gewährleistet.

Als weiterer Vorteil für die Herstellung eines SOFC-Stapels ergibt sich, dass auch die Kraftübertragung in die Glaslotschichten zwischen den einzelnen Kassettenebenen aus dem gleichen Grund vermindert und somit die Bruchgefahr im Glaslot deutlich reduziert wird.

Spezieller Beschreibungsteil

Nachfolgend wird die Erfindung anhand von einigen Figuren näher erläutert, ohne dass dadurch der sich dem Fachmann erschließende Umfang der vorliegenden Erfindung eingeschränkt wird.

In den Figuren bedeuten:

$$A = 1 + 2 + 3$$

| | |
|---|---|
| 1 | Kathode |
| 2 | Elektrolyt |
| 3 | Anode bzw. Anodensubstrat |
| 4 | Lotdichtung, RAB-Lot oder auch Glaslot |
| B = | 5 + 6 (ein oder mehrstückiger Zellenrahmen) |
| 5 | Ausgleichsrahmen = dünnwandiges Blech |
| 6 | Außenrahmen = dickes Blech |
| 7 | Sicke im Ausgleichsblech |
| 8 | starrer Abstandshalter, bzw. -rahmen |
| 9 | Interkonnektor |
| 10 | elektrische Kontaktierung durch z. B. ein Nickeldrahtgewebe |

11  Glaslotdichtung
12  Anodenraum
13  Kathodenraum
14  Fensterblech

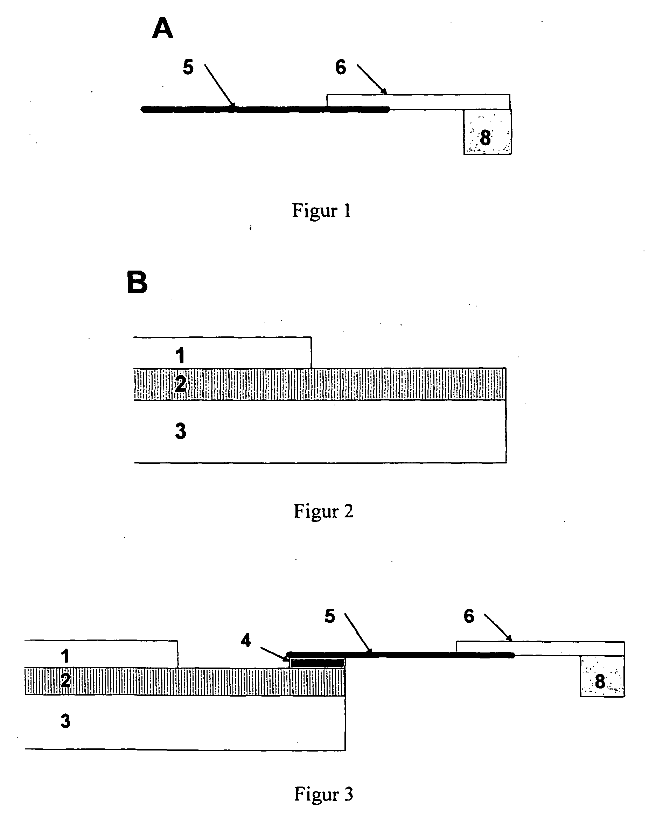

Die Figur 1 zeigt schematisch einen Querschnitt durch den umlaufenden metallischen Zellenrahmen A in der zwei- oder mehrteiligen Ausführungsform. Dieser Zellenrahmen besteht aus einem folienartigen dünnen Ausgleichrahmen 5 und einem etwas dickeren Außenrahmen 6, der an einen starren Abstandsrahmen 8 angrenzt. Für die Herstellung des Rahmenverbunds wird zunächst bei Raumtemperatur der dünne Ausgleichrahmen 5 mit dem dickeren Außenrahmen 6 und dem Abstandshalter 8 verschweißt z. B. durch Laserstrahlschweißen. Der Ausgleichrahmen 5 besteht z. B. aus Chromstahl mit einer Blechdicke von 0,05 bis 0,1 mm. Der Außenrahmen 6 besteht z. B. aus Chromstahl mit einer Blechdicke von über 0,4 mm und der Abstandshalter 8 z. B. aus Chromstahl mit einer Blechdicke von etwa 1 mm.

Die Figur 2 zeigt den Ausschnitt einer keramischen Zelle B, bestehend aus einem tragenden Anodensubstrat 3, dem Elektrolyten 2 und der Kathode 1.

Nach dem Verschweißen des Rahmenverbundes A wird dieser mit der Zelle B bei einer Temperatur von 980 bis 1100 °C verlötet, z. B. durch Aktivlöten an Luft mit RAB- Lot 4, wie es in der Figur 3 zu sehen ist.

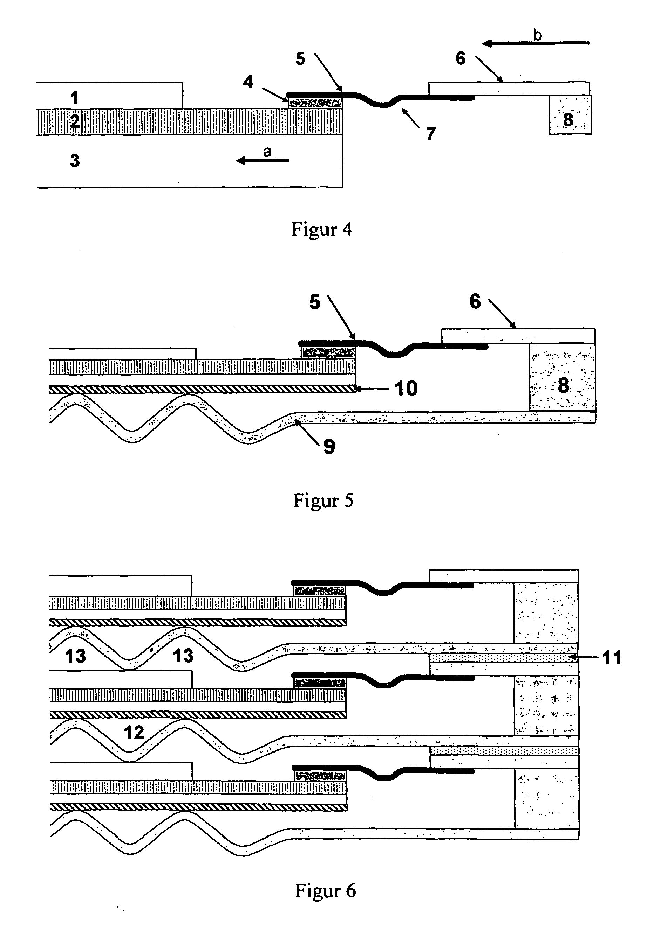

Beim Abkühlen des Verbundes 1 entsteht durch die unterschiedliche Wärmedehnung von Zelle B und Chromstahl des Zellrahmens A, angedeutet durch die Pfeile a und b, in dem dünnwandigen Teil (Ausgleichsrahmen) des metallischen Zellrahmens eine Sicke 7. Diese verläuft in der Regel umlaufend um die gesamte Zelle und ist im Querschnitt in Figur 4 dargestellt.

Figur 5 zeigt den Ausschnitt einer erfindungsgemäßen Kassette einer Brennstoffzelleneinheit, die aus dem Verbund Zelle B plus Zellrahmen A (mit Abstandhalter 8) und dem Interkonnektor 9 besteht. Beim Verschweißen von Verbund A und dem Interkonnektor 9 wird der Interkonnektor 9 gleichzeitig mittels eines Nickelnetzdrahtgewebes 10 mit der Anodensubstrat 3 elektrisch kontaktiert.

Figur 6 zeigt einen Ausschnitt eines Brennstoffzellenstapels, der durch das Stapeln von einer Reihe von erfindungsgemäß hergestellten Kassetten entsteht. Hierbei werden die einzelnen Kassetten durch Glaslot 11 so miteinander gefügt, dass jeweils der Interkonnektor 9 mit der Kathode 1 einer benachbart angeordneten Kassette elektrisch in Kontakt kommt und der Kathodenraum 13 abgedichtet wird. Im Weiteren werden die Zu- und Ableitungen des Anodenraumes 12 abgedichtet (in der Figur 6 nicht dargestellt).

In dieser Anmeldung zitierte Literatur:

[1] U. Reisgen, W. Behr, A. Cramer, S.-M. Groß, T. Koppitz, W. Mertens, J. Remmel, F.-J. Wetzel; in "Die Hochtemperaturbrennstoffzelle - eine fügetechnische Herausforderung"; Schweißen und Schneiden 2006, DVS-Berichte Band 240, Düsseldorf 2006, Seite 216-221

## Patentansprüche

1. Verfahren zum Herstellen einer Kassette für eine Hochtemperatur-Brennstoffzelle, umfassend wenigstens eine Brennstoffzelle aus Anode, Kathode und Elektrolyt sowie einen metallischen Zellrahmen mit den Schritten

   - der ein- oder mehrteilige, metallische Zellrahmen, umfassend einen inneren Ausgleichsbereich und einen starren Außenbereich, wird mit der Brennstoffelle verbunden,
   - der Zellrahmen-Brennstoffzellenverbund wird abgekühlt, wobei es zur Ausbildung einer umlaufenden Sicke in einem Teil des metallischen Rahmens kommt.

2. Verfahren nach Anspruch 1, bei dem der metallische Zellrahmen durch Prägen, Gießen, Warmpressen oder Warmwalzen hergestellt wird.

3. Verfahren nach Anspruch 1, bei dem der metallische Rahmen zunächst aus wenigstens zwei Teilen zusammengesetzt wird, wobei ein erstes Ausgleichsblech mit einem zweiten, starren Außenblech verbunden wird, und wobei das Ausgleichsblech dünner ist als das äußere, starre Außenblech.

4. Verfahren nach Anspruch 3, bei dem das Ausgleichsblech und das äußere, starre Außenblech bei Temperaturen unterhalb von 50 °C, insbesondere bei Raumtemperatur, verbunden werden.

5. Verfahren nach Anspruch 4, bei dem die beiden Teile durch Verschweißen verbunden werden.

6. Verfahren nach Anspruch 1 bis 5, bei dem der Zellrahmen mit der Brennstoffzelle bei Temperaturen zwischen 980 °C und 1100 °C verbunden wird.

7. Verfahren nach einem der Ansprüche 1 bis 6, bei dem als Material für den Ausgleichsbereich oder für den Außenbereich Chromstahl eingesetzt wird.

8. Verfahren nach einem der Ansprüche 1 bis 7, bei dem für den Ausgleichsbereich ein Material mit einer Schichtdicke zwischen 0,05 und 0,1 mm oder für den Außenbereich ein Material mit einer Schichtdicke oberhalb von 0,4 mm eingesetzt wird.

9. Verfahren nach einem der Ansprüche 1 bis 8, bei dem der metallische Zellrahmen mit einem Abstandsrahmen verbunden wird.

**10.** Verfahren nach Anspruch 9, bei dem nach dem Verbinden des metallischen Zellrahmens mit der Brennstoffzelle der Abstandsrahmen mit einem Interkonnektor verbunden wird.

**11.** Verfahren nach Anspruch 10, wobei gleichzeitig der Interkonnektor mit der Anode der Brennstoffzelle elektrisch kontaktiert wird.

**12.** Verfahren nach Anspruch 11, bei dem zur elektrischen Kontaktierung ein Nickelnetz-Drahtgewebe zwischen Interkonnektor und Anode eingesetzt wird.

**13.** Kassette für einen Hochtemperatur-Brennstoffzellenstapel, hergestellt nach einem der Ansprüche 1 bis 12, umfassend wenigstens eine Brennstoffzelle aus Anode, Kathode und Elektrolyt und einen die Brennstoffzelle umlaufenden, metallischen Zellrahmen, **dadurch gekennzeichnet,**

- **dass** der metallische Zellrahmen zwei Bereiche aufweist, einen innen liegenden, die Brennstoffzelle kontaktierenden, dünnen Ausgleichsrahmen sowie einen dickeren, starren Außenrahmen, der für den Kontakt zum Interkonnektor vorgesehen ist,
- und **dass** der innen liegende Ausgleichsrahmen bei Raumtemperatur eine umlaufende Sikke aufweist, die bei Temperaturen zwischen 980 °C und 1100 °C auf Grund der dann vorherrschenden Spannungen vollständig zurückgebildet ist.

**14.** Kassette nach Anspruch 13, bei dem zusätzlich an dem starren Außenrahmen ein Ausgleichsrahmen angeordnet ist.

**15.** Kassette nach Anspruch 14, bei dem an dem Ausgleichsrahmen ein Interkonnektor angeordnet ist.

**Claims**

**1.** Process for the manufacture of a cassette for a high temperature fuel cell comprising at least one fuel cell consisting of anode, cathode and electrolyte and a metallic cell frame, with the steps of

- joining the one-part or composite metallic cell frame comprising an inner compensation zone and a rigid outer zone to the fuel cell,
- cooling the cell-frame/fuel-cell composite, resulting in the formation of a peripheral bead in part of the metallic frame.

**2.** Process according to Claim 1, in which the metallic cell frame is produced by stamping, casting, hot pressing or hot rolling.

**3.** Process according to Claim 1, in which the metallic frame is first assembled from at least two parts, a first compensation plate being connected to a second, rigid, outer plate, and the compensation plate being thinner than the outer, rigid, outer plate.

**4.** Process according to Claim 3, in which the compensation plate and the outer, rigid, outer plate are joined at temperatures below 50°C, in particular at room temperature.

**5.** Process according to Claim 4, in which the two parts are joined by welding.

**6.** Process according to Claims 1 to 5, in which the cell frame is joined to the fuel cell at temperatures between 980°C and 1100°C.

**7.** Process according to any one of Claims 1 to 6, in which chromium steel is used as material for the compensation zone or outer zone.

**8.** Process according to any one of Claims 1 to 7, in which a material with a layer thickness of between 0.05 and 0.1 mm is used for the compensation zone or a material with a layer thickness of more than 0.4 mm is used for the outer zone.

**9.** Process according to any one of Claims 1 to 8, in which the metallic cell frame is attached to a spacer frame.

**10.** Process according to Claim 9, in which after the metallic cell frame has been joined to the fuel cell, the spacer frame is joined to an interconnector.

**11.** Process according to Claim 10, wherein the interconnector is simultaneously electrically bonded with the anode of the fuel cell.

**12.** Process according to Claim 11, in which a nickel wire mesh is used between interconnector and anode for the electrical bonding.

**13.** Cassette for a high temperature fuel cell stack produced by any one of Claims 1 to 12, comprising at least one fuel cell consisting of anode, cathode and electrolyte and a metallic cell frame surrounding the fuel cell,
**characterized in that**

- the metallic cell frame has two zones, an inner, thin, compensation frame bonded with the fuel cell, and a thicker, rigid, outer frame for the bond to the interconnector,
- and **in that** the inner compensation frame has a peripheral bead at room temperature that completely regresses at temperatures between 980°C and 1100°C owing to the stresses then induced.

14. Cassette according to Claim 13, in which a compensation frame is additionally arranged on the rigid outer frame.

15. Cassette according to Claim 14, in which an interconnector is arranged on the compensation frame.

**Revendications**

1. Procédé de fabrication d'une cassette pour une cellule électrochimique à haute température comprenant au moins une cellule électrochimique, composée d'une anode, d'une cathode et d'un électrolyte, ainsi qu'un cadre métallique de cellule, ledit procédé comprenant les étapes suivantes :

- le cadre métallique de cellule en une ou plusieurs parties, comprenant une zone d'égalisation intérieure et une zone extérieure rigide, est relié à la cellule électrochimique,
- l'ensemble du cadre de cellule et de la cellule électrochimique est refroidi, entraînant la formation d'une moulure périphérique dans une partie du cadre métallique.

2. Procédé selon la revendication 1, dans lequel le cadre métallique de cellule est formé par matriçage, coulée, estampage à chaud ou laminage à chaud.

3. Procédé selon la revendication 1, dans lequel le cadre métallique se compose dans un premier temps de deux parties au moins, une première tôle d'égalisation étant reliée à une deuxième tôle extérieure rigide et l'épaisseur de la tôle d'égalisation étant inférieure à celle de la tôle extérieure rigide.

4. Procédé selon la revendication 3, dans lequel la tôle d'égalisation et la tôle extérieure rigide sont assemblées à des températures inférieures à 50°C, en particulier à la température ambiante.

5. Procédé selon la revendication 4, dans lequel les deux parties sont assemblées par soudage.

6. Procédé selon l'une des revendications 1 à 5, dans lequel l'assemblage du cadre de cellule avec la cellule électrochimique se fait à des températures dans la plage de 980°C à 1100°C.

7. Procédé selon l'une des revendications 1 à 6, dans lequel on utilise de l'acier au chrome comme matériau pour la zone d'égalisation ou pour la zone extérieure.

8. Procédé selon l'une des revendications 1 à 7, dans lequel on utilise pour la zone d'égalisation un matériau avec une épaisseur de couche dans la plage de 0,05 à 0,1 mm ou, pour la zone extérieure, un matériau avec une épaisseur de couche supérieure à 0,4 mm.

9. Procédé selon l'une des revendications 1 à 8, dans lequel le cadre de cellule métallique est relié à un cadre d'écartement.

10. Procédé selon la revendication 9, dans lequel, après que le cadre de cellule métallique a été assemblé avec la cellule électrochimique, le cadre d'écartement est relié à un dispositif d'interconnexion.

11. Procédé selon la revendication 10, dans lequel le dispositif d'interconnexion est en même temps relié électriquement à l'anode de la cellule électrochimique.

12. Procédé selon la revendication 11, dans lequel on utilise une toile métallique en nickel pour réaliser le contact électrique entre le dispositif d'interconnexion et l'anode.

13. Cassette pour une pile de cellules électrochimiques à haute température, fabriquée selon l'une des revendications 1 à 12, comprenant au moins une cellule électrochimique, composée d'une anode, d'une cathode et d'un électrolyte, et un cadre métallique entourant la cellule électrochimique, **caractérisée en ce que**

- le cadre de cellule métallique présente deux zones, un cadre d'égalisation mince situé à l'intérieur qui établit le contact électrique avec la cellule électrochimique, ainsi qu'un cadre extérieur rigide plus épais prévu pour réaliser le contact électrique avec le dispositif d'interconnexion,
- et **en ce que** le cadre d'égalisation intérieur présente à la température ambiante une moulure périphérique qui a été entièrement reformée à des températures dans la plage de 980°C à 1100°C sous l'effet des tensions présentes à ce moment.

14. Cassette selon la revendication 13, dans laquelle un cadre d'égalisation est disposé en plus sur le cadre extérieur rigide.

15. Cassette selon la revendication 14, dans laquelle un dispositif d'interconnexion est disposé sur le cadre d'égalisation.

**A**

Figur 1

**B**

Figur 2

Figur 3

Figur 4

Figur 5

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003096147 A1

**In der Beschreibung aufgeführte Nicht-Patentliteratur**

- **U. Reisgen ; W. Behr ; A. Cramer ; S.-M. Groß ; T. Koppitz ; W. Mertens ; J. Remmel ; F.-J. Wetzel.** Die Hochtemperaturbrennstoffzelle - eine fügetechnische Herausforderung. *Schweißen und Schneiden 2006,* 2006, vol. 240, 216-221